# EUROPEAN PATENT SPECIFICATION

(11) **EP 2 077 396 B1**
(45) Date of publication and mention of the grant of the patent: **16.06.2010**
(21) Application number: 08150027.4
(22) Date of filing: 03.01.2008
(51) Int. Cl.: F16B 5/02, F16B 25/00, F16B 33/02

(54) **Screw with double thread**
Schraube mit zweigängigem Gewinde
Vis avec filetage double

(43) Date of publication of application: 08.07.2009
(73) Proprietor: Taiwan Shan Yin Int'l Co., Ltd., Cianjhen District Kaohsiung 806 (TW)
(72) Inventor: Su, Guo-Cai, Kaohsiung 806 (TW)
(74) Representative: Chaillot, Geneviève

(56) References cited:
- EP-A- 1 850 016
- US-A- 3 937 119
- US-A- 6 022 177
- US-A1- 2006 269 380
- US-A1- 2007 128 001

## Description

### BACKGROUND OF THE INVENTION

### 1. Field of the Invention

The present invention relates to a screw, in particularly a multi-threaded screw.

### 2. Description of the Related Art

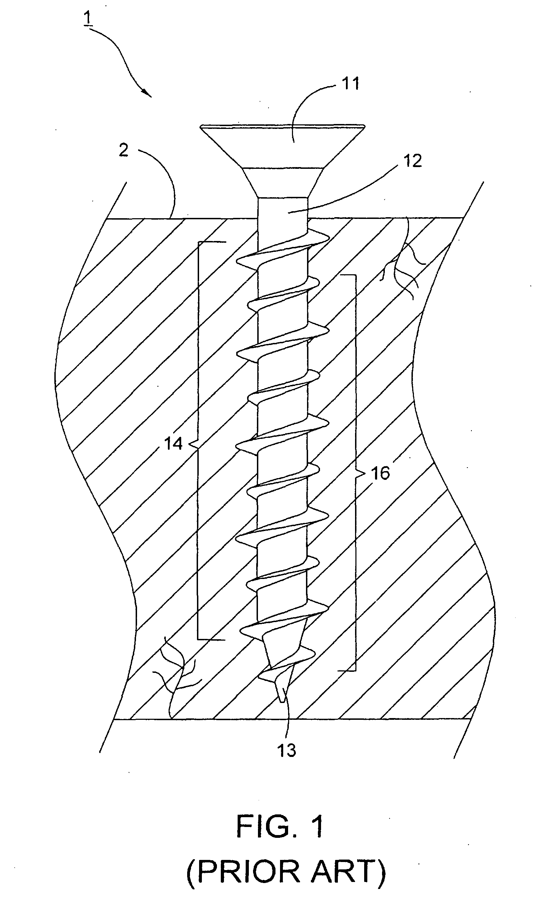

Referring to Fig. **1**, a conventional screw **1** comprises a shank **12,** a head **11** disposed on one side thereof, a distal end **13** on the other side thereof, and a first threaded section **14** and a second threaded section **16** spirally arranged on the shank **12;** wherein the two threaded sections **14 - 16** alternate with each other. While screwing, the end **13** is initially drilled into the object **2,** and the two threaded sections **14 - 16** assist to cut the fibers so that the screw **1** can be screwed into the object **2.**

Generally, in view of the two threaded sections **14 - 16** and the threads thereof, the object fibers and debris may not be thoroughly cut and shattered, which results of those cuttings being normally twisted round the shank **12** and increasing the screwing resistance. Further, the cuttings may be hardly guided out, namely they would be incessantly accumulated in the object **2** and the movement thereof would also be interfered while screwing so that both the object **2** and the screw **1** would be facilely damaged or broken under the pressure of the accumulation. Subsequently, the screw **1** may be successfully screwed into the object **2** but may not substantially embed itself therein. That is, the threads merely push fibers away from their places but do not firmly catch them for a good holding force after screwing in, and the screw **1** thus is turned back toward the surface of the object **2** in response to the resilience of the object fibers and the external force imparted to the object **2,** e.g. the vibration on the object; therefore, the objects fastened by the screw **1** would be loose or even fall over and which hence harms the users.

US-A-3 937 119 discloses a screw having a sharp crested helical thread formed along the shank and helical protuberances forming guide means spaced along the shank between adjacent convolutions of the helical thread. Notches are formed on the crests of the helical thread along the length of the shank.

EP-A-1 850 016 discloses a screw with a thread divided into first and second thread sections. A plurality of slots are disposed on the first thread section, which divides the thread into a plurality of thread segments, wherein each of the thread segment has a first inclined surface and a second inclined surface on two ends thereof; the first inclined surface being parallel to the second inclined surface. The thread peak of the second thread section is formed as a saw tooth-shape.

US 2007/128001 A1 discloses a screw which includes two types of threads, the first threads being located close to the point of the shank and the second threads extending from the head of the screw, the two threads spiraling in opposite direction. The first threads have the outside diameter larger than the outside diameter of the second threads having a greater flank angle than the first threads.

### SUMMARY OF THE INVENTION

Therefore, the object of the present invention is to provide a multi-threaded screw which is conducive to reduce the screwing resistance and prevent the screw from being turned back unintentionally and the object from being broken in time of screwing.

The multi-threaded screw in accordance with the present invention mainly comprises a shank, a head, a distal end, and two threaded sections; wherein, a second threaded section spirals round the shank from the distal end toward the head and alternates with a first threaded section, and the second threaded section has an outer diameter smaller than the first threaded section; further, a plurality of concavities are disposed on an circumference of each thread of the second threaded section, and each of the concavities defines two flanks therein. While screwing, the second threaded section assists to cut and shatter the cuttings, so as to decrease the screwing resistance and avoid damaging the object by lowering the possibility of the shank twisted by the debris and reducing the incessant concavities substantially receive the remaining cuttings thereby ensuring a good resistance of extraction.

The advantages of the present invention over the known prior arts will become more apparent to those of ordinary skilled in the art by reading the following descriptions with the relating drawings.

### BRIEF DESCRIPTION OF THE DRAWINGS

Fig. 1 is a schematic view showing a conventional invention screwing into the object;
Fig. 2 is a perspective view showing a first preferred embodiment of the present invention;
Fig. 3 is an elevation view showing a second preferred embodiment of the present invention;
Fig. 4 is a sectional view showing the portion "A" of the first preferred embodiment in Fig. 2;
Fig. 5 is a sectional view showing a third preferred embodiment of the present invention;
Fig. 6 is a schematic view showing the first embodiment of Fig. 2 screwed into the object;
Fig. 7 is a schematic view showing a fourth embodiment of the present invention screwed into the object;
Fig. 8 is a schematic view showing a fifth embodiment of the present invention screwed into the composite objects; and
Fig.9 is a schematic view showing a sixth embodiment of the present invention screwed into the composite objects.

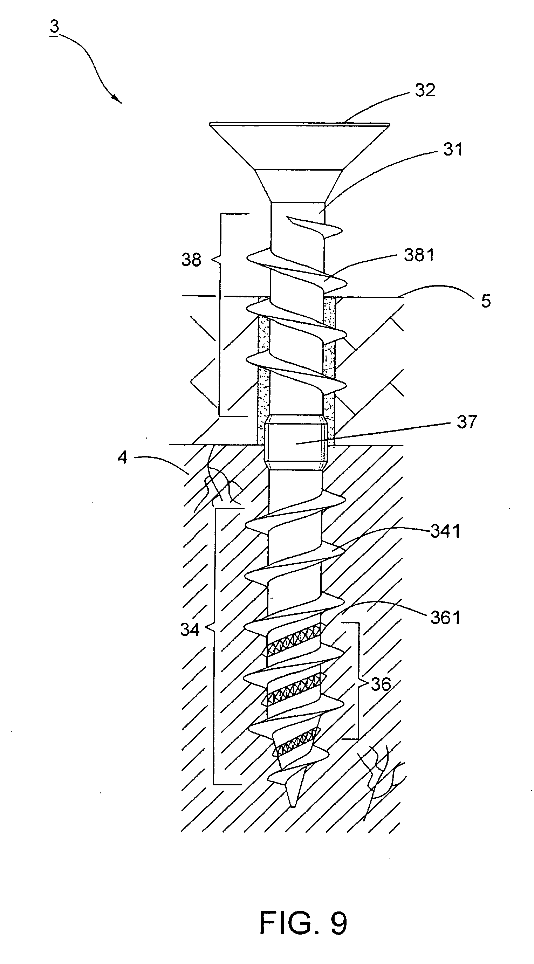

Fig.9 is a schematic view showing a sixth embodiment of the present invention screwed into the composite objects.

### DETAILED DESCRIPTION OF THE PREFERRED EMBODIMENTS

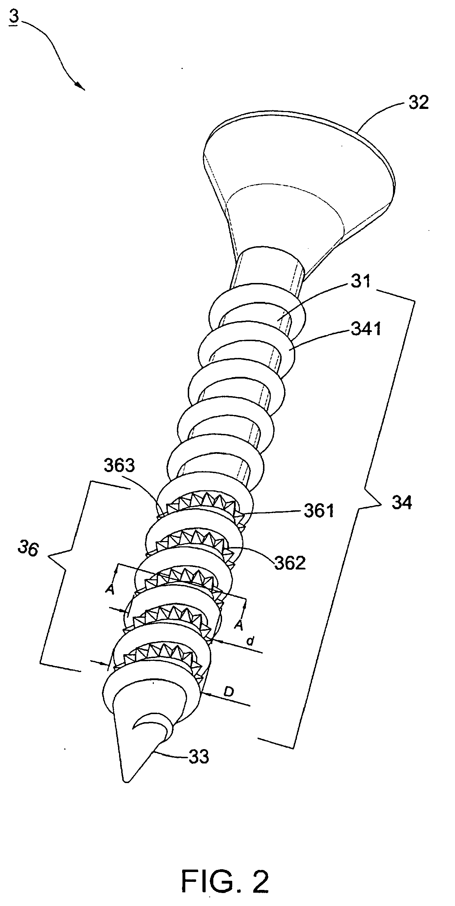

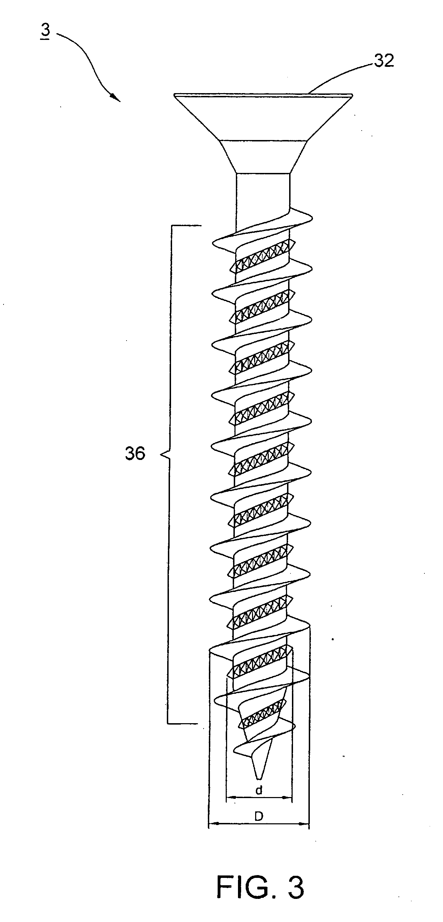

Referring to Fig. **2****,** a multi-threaded screw **3** of a first preferred embodiment of the present invention comprises a shank **31,** a head **32** disposed on one side of the shank **31,** a distal end **33** on the other side thereof which is opposite to the head **32,** and a first threaded section **34** and a second threaded section **36** spirally disposed on the shank **31** and respectively consisting of a plurality of threads **341 - 361** arranged thereon; wherein, the second threaded section **36** extends from the distal end **33** toward the head **32** and alternates with the first threaded section **34.** The second threaded section **36** can appropriately extend around the shank **31** in a certain length (shown in Fig. **2**) or ascend thereon to be located adjacent to the head **32,** approximately a length of the shank **31** (shown in Fig. **3**)**.** Still, an outer diameter **"d"** of the second threaded section **36** is smaller than an outer diameter **"D"** the first threaded section **34.**

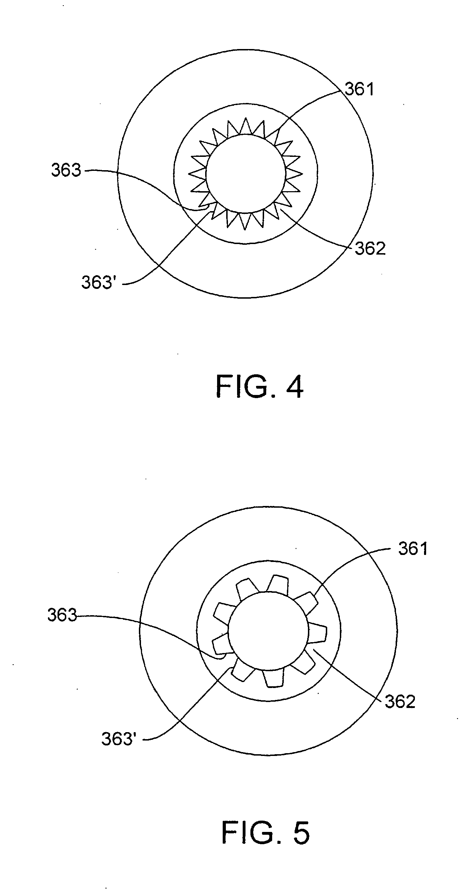

Further, a plurality of concavities **362** radially disposed around an circumference of each thread **361** of the second threaded section **36,** and each of the concavities **362** provides with a leading flank **363** and a trailing flank **363'.** The two flanks **363** and **363'** converge toward one point, by which the thread **361** is formed in a contour as an incessant hillside around its circumference (shown in Fig. **4**)**;** relatively, the two flanks **363 363'** may also be interrupted so that the concavities **362** are evenly spaced and arranged around the circumference of the thread **361** (shown in Fig. **5**) **.** Here each thread **361** is adopted to present in a state of serration shown in Fig. **4** in the following preferred embodiments of the present invention.

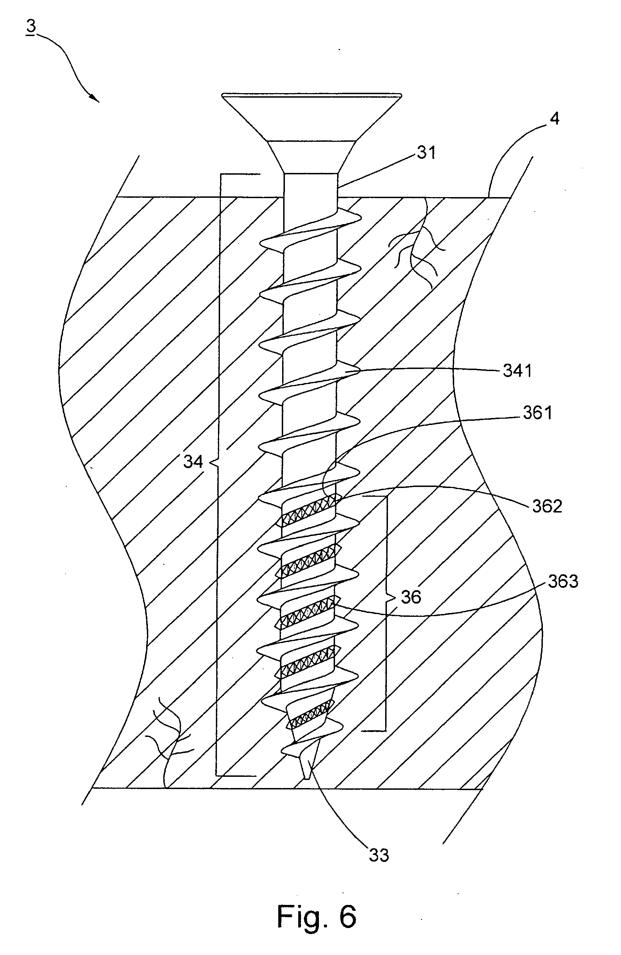

Referring to Fig. **6****,** in operation, the distal end **33** is initially drilled into the object **4** (for instance of a wood material), further the first and the second threaded sections **34 - 36** are exerted to cut fibers of the object **4,** namely the first threaded section **34** firstly cut and sever the fibers into debris and immediately the leading flank **363** and the trailing flank **363'** of the second threaded section **36** assist to shatter the debris into a small chips. Subsequently, those cuttings would not be facilely twisted round the shank **31** and not be incessantly accumulated in the object **4,** so as to reduce the resistance of screwing and avoid the burst of the object **4** under the pressure of the accumulation. After screwing in, the remaining cuttings which are not guided out of the object **4** would be accommodated between the two threaded sections **34 - 36** or be received by the concavities **362** of the thread **361** for obtaining a holding force, whereby the multi-threaded screw **3** can be firmly secured in the object **4** by increasing the resistance of extraction although it is subjected to the external force imparted to the multi-threaded screw **3.**

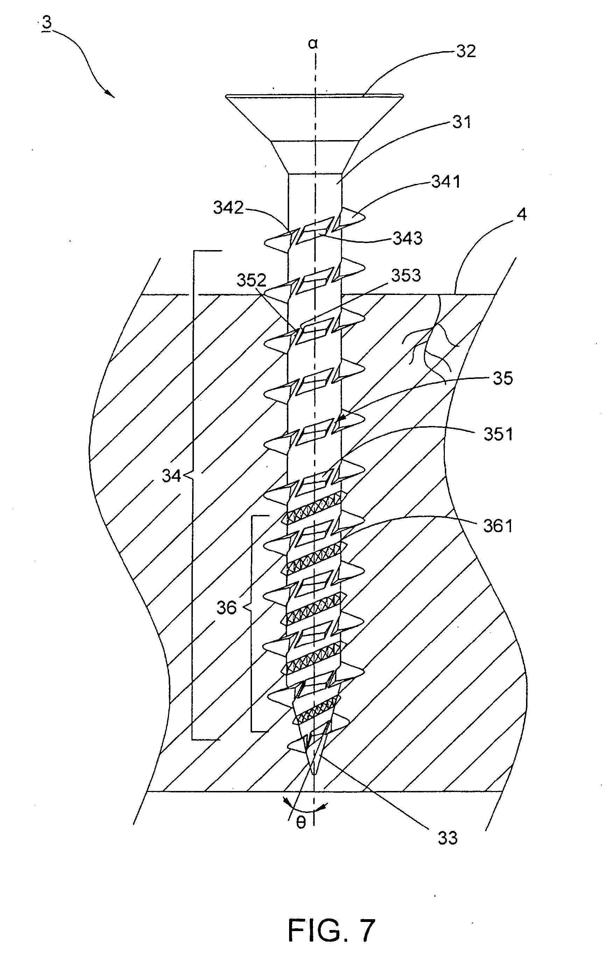

Referring to Fig. **7****,** a multi-threaded screw **3** of a fourth preferred embodiment is similar to the first preferred embodiment, and the operations and functions are the same. Particularly, each threads **341** on the first threaded section **34** consists of an upper flank **342** and a lower flank **343** and is interrupted by a plurality of slots **35** inclined with respect to a shank axial line "α" by an angle "θ", so as to divide the thread **341** into a plurality of threaded portions **351.** Each threaded portion **351** has a first surface **352** and a second surface **353** defined on both side surfaces thereof. Further, the first surface **352** is disposed below the upper flank **342,** facing the distal end **33;** furthermore, the second surface **353** is disposed above the lower flank **343,** facing the head **31;** the first surface **352** is parallel to the second surface **353.** In this manner, the threaded portions **351** facilitate to guide the debris out of the surface of the object **4** and simultaneously the second threaded section **36** assists to receive the remaining fibers and debris, the multi-threaded screw **3** thus can be rapidly and firmly fixed into the object **4** while screwing.

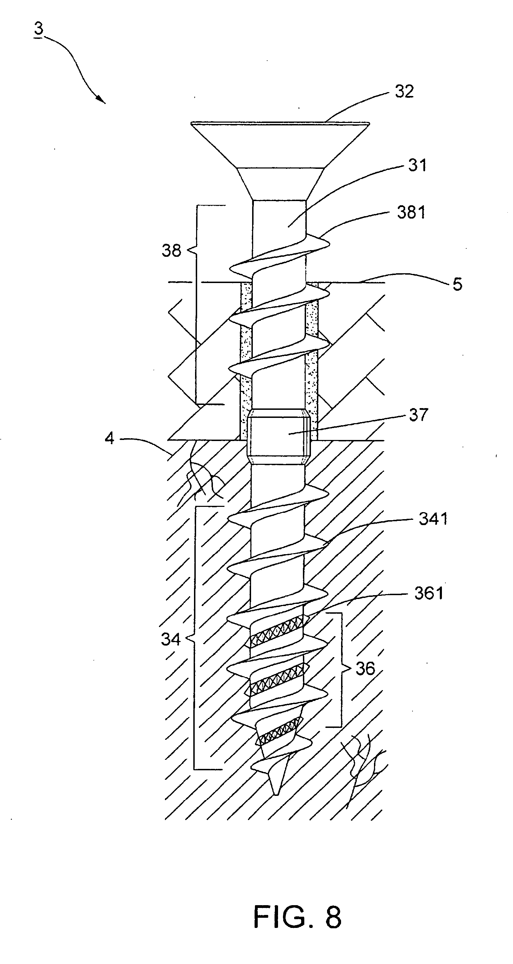

Referring to Fig. **8****,** a multi-threaded screw **3** of a fifth preferred embodiment also has the elements and operations as the same as the first preferred embodiments. Notably, a third threaded section **38** additionally spirals above the first threaded section **34** and is located adjacent to the head **32,** and a thread-free portion **37** is arranged between the first threaded section **34** and the third threaded section **38.** Simultaneously, the third threaded section **38** includes a plurality of threads **381** spiraling in a direction as the same as the threads **341 - 361** of the first and second threaded sections **34 - 36** or in a direction reverse thereto as shown in Fig. **9**. Thus, the propelling the wood object **4** to closely contact therewith, thereby increasing the screwing capability.

To sum up, the present invention takes advantages of the two threaded sections to enhance the cutting capability, e.g. severing and shattering the cuttings into small chips, and which prevents the cuttings from being twisted round the shank and from being successively accumulated in the object so as to reduce the screwing resistance and avoiding braking of the object. Simultaneously, the remaining cuttings can be received in the concavities thereby ensuring a good resistance of extraction.

While we have shown and described the embodiment in accordance with the present invention, it should be clear to those skilled in the art that further embodiments may be made without departing from the scope of the present invention, as defined by the appended claims.

## Claims

1. A multi-threaded screw (3) comprising:
a shank (31);
a head (32) disposed on one side of said shank (31);
a distal end (33) on the other side thereof, opposite to said head (32) ;
a first threaded section (34) spirally disposed on said shank (31) and consisting of a plurality of threads (341); and
a second threaded section (36) alternating with said first threaded section (34); said second threaded (36) consisting of a plurality of threads (361) arranged thereon;
**characterized in that** an outer diameter (d) of said second threaded section (36) being smaller than an outer diameter (D) of said first threaded section (34), and said second threaded section (36) spirals round said shank (31) from said distal end (33) toward said head (32) and extends on said shank (31) on a part of or on approximately a length of said shank, so that said second threaded section (36) does not terminate to be located adjacent to said head (32); each thread (361) of said second threaded section (36) having a plurality of concavities (362) radially disposed around an circumference thereof, and each of said concavities (362) providing with a leading flank (363) and a trailing flank (363') defined therein.

2. The multi-threaded screw as claimed in claim 1, wherein, said second threaded section (36) can be incessantly ascends on said shank (31) so as to terminate to be located adjacent to said head (32).

3. The multi-threaded screw as claimed in claim 1 or 2, wherein, each thread (341) of said first threaded section (34) consists of an upper flank (342) and a lower flank (343) and is interrupted by a plurality of slots (35) inclined with respect to a shank axial line (α) by an angle ( θ ), so as to divide said each thread (341) into a plurality of threaded portions (351) ; each of said threaded portions (351) has a first surface (352) and a second surface (353) defined on both side surfaces thereof; said first surface (352) is disposed below said upper flank (342), facing said distal end (33), and said second surface (353) is disposed above said lower flank (343), facing said head (32); said first surface (352) is parallel to said second surface (353).

4. The multi-threaded screw as claimed in claim 1, wherein, a third threaded section (38) additionally spirals above said first threaded section (34) and is located adjacent to said head (32), and a thread-free portion (37) is arranged between said first threaded section (34) and said third threaded section (38)

5. The multi-threaded screw as claimed in claim 4, wherein, said third threaded section (38) spirals in a direction as the same as said first and said second threaded sections (34, 36).

6. The multi-threaded screw as claimed in claim 4, wherein, said third threaded section (38) spirals in a direction reverse to said first and said second threaded sections (34, 36).

## Patentansprüche

1. Mehrgewindeschraube (3) enthaltend :
einen Schaft (31) ;
einen auf einer Seite des Shafts (31) angeordneten Kopf (32) ;
ein distales Ende (33) auf der anderen Seite davon,
gegenüber dem Kopf (32);
einen spiralförmig auf dem Schaft (31) angeordneten ersten Gewindeabschnitt (34),der aus einer Vielzahl von Gewinden (341) besteht; und
einen mit dem ersten Gewindeabschnitt (34) abwechselnden zweiten Gewindeabschnitt (36), welcher zweite Gewindeabschnitt (36) aus einer Vielzahl von darauf angeordneten Gewinden (361) besteht;
**dadurch gekennzeichnet, dass** ein Außendurchmesser (d) des zweiten Gewindeabschnittes (36) kleiner als ein Außendurchmesser (D) des ersten Gewindeabschnittes (34) ist, und der zweite Gewindeabschnitt (36) sich spiralförmig um den Schaft (31) von dem distalen Ende (33) zu den Kopf (32) windet und sich auf dem Schaft (31), auf einem Teil von oder auf etwa einer Länge von dem Schaft erstreckt, so dass der zweite Gewindeabschnitt (36) nicht angrenzend an den Kopf (32) beendet, wobei jedes Gewinde (361) des zweiten Gewindeabschnitt (36) eine Vielzahl von um einen Umfang davon radial angeordneten Konkavitäten (362) enthaltet, und jede der Konkavitäten (362) eine Vorflanke (363) und eine Nachflanke (363'), definiert davon, aufweist.

2. Mehrgewindeschraube nach Anspruch 1, wobei der zweite Gewindeabschnitt (36) ohne Unterbrechung auf dem Schaft (31) hinaufgehen kann, so dass er angrenzend an den Kopf (32) beendet.

3. Mehrgewindeschraube nach Anspruch 1 oder 2, wobei jedes Gewinde (341) des ersten Gewindeabschnitt (34) aus eine Oberflanke (342) und eine Unterflanke (343) besteht und von einer Vielzahl von Rillen (35) untergebracht wird, welche relativ zu einer axialen Schaftlinie von einer Winkel (θ) geneigten sind, so dass jedes Gewinde (341) in eine Vielzahl von Gewindeabschnitten (351) geteilt wird, wobei jeder Gewindeabschnitt (351) eine erste Fläche (352) und eine zweite Fläche (353) aufweist, welche auf die beide Seitenflächen davon definiert sind, wobei die erste Fläche (352) unter der Oberflanke (342) gegenüber dem distalen Ende (33) angeordnet ist, und die zweite Fläche (353) über der Unterflanke (343) gegenüber dem Kopf (32) angeordnet ist ; die erste Fläche (352) parallel zu der zweiten Fläche (353) ist.

4. Mehrgewindeschraube nach Anspruch 1, wobei ein dritter Gewindeabschnitt (38) zusätzlich sich spiralförmig über dem ersten Gewindeabschnitt (34) windet und angrenzend zum Kopf (32) liegt, und ein gewindefreier Abschnitt (37) zwischen dem ersten Gewindeabschnitt (34) und dem dritten Gewindeabschnitt (38) angeordnet ist.

5. Mehrgewindeschraube nach Anspruch 4, wobei der dritte Gewindeabschnitt (38) sich spiralförmig in eine gleiche Richtung wie der erste und der zweite Gewindeabschnitte (34, 36) windet.

6. Mehrgewindeschraube nach Anspruch 4, wobei der dritte Gewindeabschnitt (38) sich spiralförmig in eine entgegengesetzte Richtung wie der erste und der zweite Gewindeabschnitte (34, 36) windet.

## Revendications

1. Vis à filetage multiple (3) comprenant :
une tige (31) ;
une tête (32) disposée sur un côté de ladite tige (31) ;
une extrémité distale (33) sur l'autre côté de celle-ci, à l'opposé de ladite tête (32) ;
une première section filetée (34) disposée en spirale sur ladite tige (31) et consistant en une pluralité de filets (341) ; et
une seconde section filetée (36) en alternance avec ladite première section filetée (34) ; ladite seconde section filetée (36) consistant en une pluralité de filets (361) disposés sur celle-ci ;
**caractérisée par le fait qu'**un diamètre externe (d) de ladite seconde section filetée (36) est inférieur à un diamètre externe (D) de ladite première section filetée (34), et ladite seconde section filetée (36) s'enroule en spirale autour de ladite tige (31) à partir de ladite extrémité distale (33) vers ladite tête (32) et s'étend sur ladite tige (31) sur une partie de ou sur approximativement une longueur de ladite tige, de telle sorte que ladite seconde section filetée (36) ne se termine pas en étant située adjacente à ladite tête (32) ; chaque filet (361) de ladite seconde section filetée (36) ayant une pluralité de concavités (362) disposées radialement autour d'une circonférence de celle-ci, et chacune desdites concavités (362) comprenant un flanc avant (363) et un flanc arrière (363') définis dans celle-ci.

2. Vis à filetage multiple selon la revendication 1, dans laquelle ladite seconde section filetée (36) est apte à monter sans interruption sur ladite tige (31) de façon à se terminer en étant située adjacente à ladite tête (32).

3. Vis à filetage multiple selon l'une des revendications 1 ou 2, dans laquelle chaque filet (341) de ladite première section filetée (34) consiste en un flanc supérieur (342) et en un flanc inférieur (343) et est interrompu par une pluralité d'encoches (35) inclinées par rapport à une ligne axiale de tige (α) d'un angle (θ), de façon à diviser chaque filet précité (341) en une pluralité de parties filetées (351) ; chacune desdites parties filetées (351) a une première surface (352) et une seconde surface (353) définies sur les deux surfaces latérales de celle-ci ; ladite première surface (352) est disposée au-dessous dudit flanc supérieur (342), faisant face à ladite extrémité distale (33), et ladite seconde surface (353) est disposée au-dessus dudit flanc inférieur (343), faisant face à ladite tête (32) ; ladite première surface (352) est parallèle à ladite seconde surface (353).

4. Vis à filetage multiple selon la revendication 1, dans laquelle une troisième section filetée (38) de façon additionelle s'enroule en spirale au-dessus de ladite première section filetée (34) et est située adjacente à ladite tête (32), et une partie sans filet (37) est disposée entre ladite première section filetée (34) et ladite troisième section filetée (38).

5. Vis à filetage multiple selon la revendication 4, dans laquelle ladite troisième section filetée (38) s'enroule en spirale dans une direction identique à ladite première et à ladite seconde section filetée (34, 36).

6. Vis à filetage multiple selon la revendication 4, dans laquelle ladite troisième section filetée (38) s'enroule en spirale dans une direction inverse par rapport à ladite première et à ladite seconde section filetée (34, 36).
